# FASCICULE DE BREVET EUROPEEN

(11) **EP 3 430 480 B1**
(45) Date de publication et mention de la délivrance du brevet: **29.04.2020**
(21) Numéro de dépôt: 17700374.6
(22) Date de dépôt: 13.01.2017
(51) Int. Cl.: G04B 19/04, G04B 13/02, F16B 2/02, F16B 2/24, F16B 21/06

(54) **AIGUILLE COMPORTANT UNE PIECE D'EXTREMITE ET PROCEDE D'ASSEMBLAGE**
VERFAHREN ZUM ZUSAMMENBAU EINER VORRICHTUNG, DIE MINDESTENS AUS ZWEI TEILEN BESTEHT
METHOD FOR ASSEMBLING A DEVICE COMPRISING AT LEAST TWO PARTS

(30) Priorité: 15.03.2016 EP 16160419
(43) Date de publication de la demande: 23.01.2019
(73) Titulaire: The Swatch Group Research and Development Ltd, 2074 Marin (CH)
(72) Inventeur: CAROZZANI, Tommy, 2000 Neuchâtel (CH); WINKLER, Yves, 3185 Schmitten (CH)
(74) Mandataire: ICB SA
(86) Numéro de dépôt international: PCT/EP2017/050706
(87) Numéro de publication internationale: WO 2017/157540

(56) Documents cités:
- EP-A1- 2 400 353
- EP-A1- 2 605 086
- EP-A2- 2 706 415
- JP-A- 2001 124 869

## Description

La présente invention concerne un dispositif comprenant une première pièce et au moins une seconde pièce devant être assemblée sur la première pièce.

Plus précisément, la présente invention concerne une aiguille sur laquelle une pièce d'extrémité interchangeable est assemblée, ainsi qu'un procédé d'assemblage d'une pièce d'extrémité sur une aiguille.

### ARRIERE PLAN TECHNOLOGIQUE

Il existe de nombreux composants, notamment dans le domaine de l'horlogerie, qui nécessitent l'assemblage d'au moins deux pièces l'une avec l'autre. Actuellement, l'assemblage d'un composant composé d'une pièce en métal amorphe avec une pièce en matériau quelconque peut se faire en utilisant plusieurs techniques.

Une technique classique consiste à utiliser un troisième corps comme de la colle ou de la brasure. Cette colle ou brasure fait office d'interface entre la pièce en métal amorphe et la pièce en matériau quelconque. Toutefois, ces techniques de collage ou brasage présentent des inconvénients. En effet, si la technique de brasage implique l'utilisation d'une source de chaleur pouvant provoquer des modifications des propriétés mécaniques ou esthétiques, l'utilisation d'une colle doit se faire en la choisissant afin qu'elle soit adaptée à l'environnement dans lequel le composant fonctionnera tout en s'assurant que cette colle ne perturbe pas son bon fonctionnement et assure une fixation stable dans le temps. De plus, les assemblages collés ou brasés ne sont pas facilement démontables et remontables.

Une autre technique consiste à utiliser les propriétés de formage à chaud des métaux amorphes. En effet, les métaux amorphes présentent la particularité de voir leur viscosité se modifier lorsqu'ils sont chauffés jusqu'à une température comprise entre la température de transition vitreuse et la température de cristallisation du matériau. Dans cet intervalle, ledit matériau voit donc sa viscosité diminuer fortement de sorte qu'il devient facilement déformable. Une faible contrainte de l'ordre de 1 MPa peut donc être appliquée audit matériau pour le mettre en forme. Toutefois, cette technique d'assemblage nécessite généralement l'agencement de dispositifs d'accroché comme des creusures ou saillies afin d'améliorer l'accroche du métal amorphe. Ces zones d'accroché sont souvent complexes à réaliser. Dans cette approche, l'assemblage est définitif et ne peut être démonté.

Toutefois, lorsque les pièces à assembler sont très petites, notamment lorsqu'il s'agit d'une aiguille de pièce horlogère, les techniques de l'art antérieur ne peuvent que difficilement être utilisées.

### RESUME DE L'INVENTION

L'invention a pour but de pallier les inconvénients de l'art antérieur en proposant un procédé d'assemblage permettant d'assembler de manière esthétique des pièces très petites, et notamment une pièce d'extrémité sur une aiguille.

L'invention vise notamment à proposer un procédé d'assemblage permettant d'assembler de manière simple une pièce d'extrémité interchangeable sur une aiguille de pièce horlogère.

Pour ce faire, est proposé selon un premier aspect de l'invention, un procédé d'assemblage d'un dispositif comprenant une aiguille de pièce horlogère et au moins une pièce d'extrémité devant être assemblée avec une extrémité de l'aiguille, l'aiguille étant réalisée en un matériau métallique au moins partiellement amorphe, caractérisé en ce que ledit procédé comprend en outre les étapes suivantes :
- se munir de l'aiguille et de la pièce d'extrémité, l'aiguille comprenant un corps et des moyens d'attache définissant un logement, les moyens d'attache comportant deux bras élastiques en matériau métallique au moins partiellement amorphe ;
- déformer les moyens d'attache en exerçant une force afin d'agrandir temporairement le logement ;
- placer la pièce d'extrémité dans le logement ;
- relâcher la force exercée sur les moyens d'attache pour permettre au logement de reprendre ses dimensions initiales et maintenir la pièce d'extrémité.

Un autre aspect de l'invention concerne un procédé d'assemblage d'un dispositif comprenant une aiguille de pièce horlogère et au moins une pièce d'extrémité devant être assemblée avec une extrémité de l'aiguille, la pièce d'extrémité étant réalisée en un matériau métallique au moins partiellement amorphe, caractérisé en ce que ledit procédé comprend en outre les étapes suivantes :
- se munir de l'aiguille et de la pièce d'extrémité, l'aiguille comprenant un corps et des moyens d'attache définissant un logement, les moyens d'attache comportant deux bras;
- déformer élastiquement la pièce d'extrémité en exerçant une force afin de pouvoir l'insérer dans le logement de l'aiguille;
- placer la pièce d'extrémité dans le logement ;
- relâcher la force exercée sur la pièce d'extrémité pour qu'elle remplisse le logement et soit maintenue par les moyens d'attache de l'aiguille.

Selon différents modes de réalisation :
- la force peut être exercée via un outil ;
- les étapes de déformation, d'insertion et de relâchement de la force exercée peuvent être regroupées en une seule étape d'insertion à force de la seconde pièce ;
- la pièce d'extrémité peut être un élément décoratif pris dans le groupe suivant : indicateur de forme adapté au design de la pièce horlogère, cet indicateur pouvant présenter une forme de papillon, fleur, flèche, ballon, corps céleste, palette en couleur, pierre précieuse ;
- la pièce d'extrémité peut être un élément fonctionnel pris dans le groupe suivant : canon, axe, contrepoids, indicateur, vernier, loupe, pastille de matière fluorescente ou phosphorescente, LED ;
- le matériau métallique peut être totalement amorphe ;
- le matériau métallique peut être au moins 50% amorphe.

Un autre aspect de l'invention concerne un dispositif comprenant une aiguille pour pièce horlogère et au moins une pièce d'extrémité devant être assemblée avec une extrémité de l'aiguille, l'aiguille comprenant un corps à partir duquel des moyens d'attache s'étendent, les moyens d'attache comportant deux bras élastiques, les moyens d'attache définissant un logement pour la pièce d'extrémité, les deux bras élastiques étant réalisés en un matériau métallique au moins partiellement amorphe permettant aux moyens d'attache d'être déformés pour agrandir temporairement ledit logement pour l'insertion de la pièce d'extrémité.

Un autre aspect de l'invention concerne un dispositif comprenant une aiguille pour pièce horlogère et au moins une pièce d'extrémité devant être assemblée avec une extrémité de l'aiguille, l'aiguille comprenant un corps à partir duquel des moyens d'attache s'étendent, les moyens d'attache comportant deux bras définissant un logement pour la pièce d'extrémité, la pièce d'extrémité étant réalisée en un matériau métallique au moins partiellement amorphe lui permettant d'être temporairement déformée pour permettre son insertion dans le logement.

Selon différents modes de réalisation :
- la pièce d'extrémité peut être cylindrique ;
- la pièce d'extrémité peut être ovale ;
- la pièce d'extrémité peut présenter un diamètre compris entre 0.5 mm et 5 mm ;
- la pièce d'extrémité peut être une loupe ;
- la pièce d'extrémité peut être un contrepoids ;
- la pièce d'extrémité peut être un élément décoratif ;
- la pièce d'extrémité peut être un indicateur ;
- la pièce d'extrémité peut être un canon ou un axe sur lequel ladite aiguille est fixée.

### BREVE DESCRIPTION DES FIGURES

Les buts, avantages et caractéristiques du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :
- les figures 1 et 2 représentent de manière schématique le dispositif utilisant le procédé selon la présente invention;
- les figures 3 à 5 représentent de manière schématique le procédé d'assemblage selon un mode de réalisation de la présente invention;
- les figures 6 et 7 représentent de manière schématique une variante du procédé d'assemblage selon la présente invention;
- les figures 8 à 11 représentent de manière schématique le dispositif utilisant le procédé selon la présente invention dans son utilisation.

### DESCRIPTION DETAILLEE

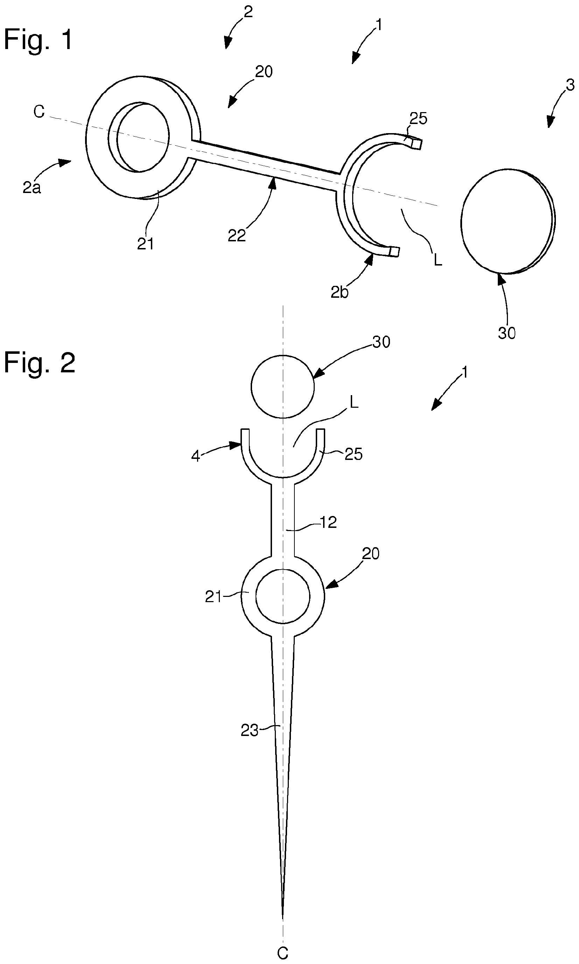

Sur la figure 1 est représenté un dispositif 1 comprenant une première pièce 2 et au moins une seconde pièce 3. La première pièce est une aiguille de pièce horlogère. Elle présente une longueur comprise entre 3mm et 30mm. L'aiguille présente une largeur comprise entre 300um et 5mm. L'aiguille présente une épaisseur comprise entre 50um et 1mm La seconde pièce est une pièce d'extrémité 30 destinée à être assemblée sur une extrémité de l'aiguille. Ainsi, selon différents modes de réalisation, la pièce d'extrémité peut être :
- un élément fonctionnel, comme par exemple un axe, un canon, une loupe, un indicateur, un vernier, un contrepoids, une LED pour illuminer soit le cadran, soit le bout de l'aiguille.
- un élément décoratif, comme par exemple une pierre précieuse, une palette en couleur, un papillon ou tout autre élément en rapport avec le design de la pièce horlogère.

La première pièce est constituée d'un corps 2a et de moyens d'attache 2b permettant l'assemblage avec la seconde pièce 3.

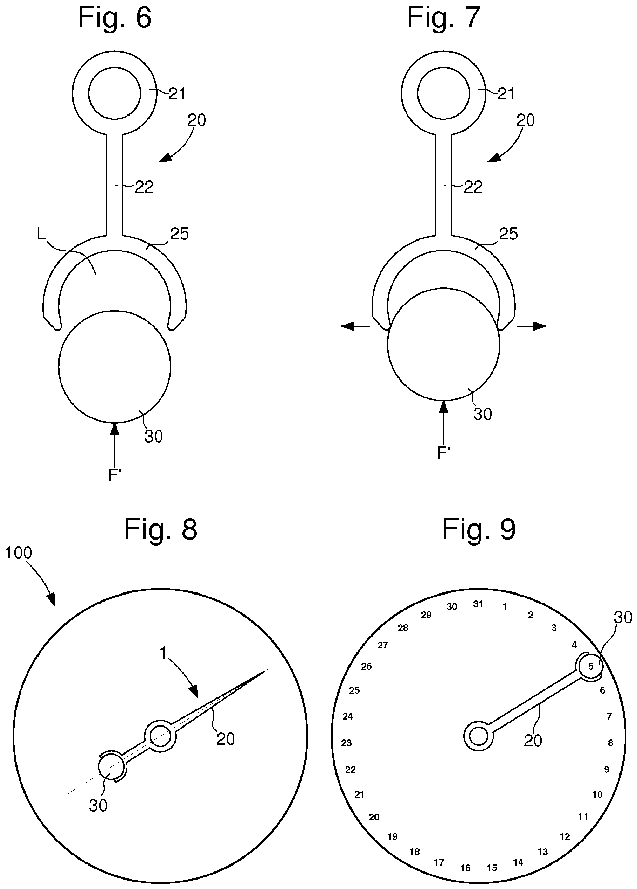

Dans le cas d'une aiguille, il existe plusieurs possibilités. Une première possibilité est que l'élément 30 assemblé à l'aiguille soit un élément fonctionnel. Par exemple, cet élément 30 sera un élément indicateur qui servira à pointer une information ou alors cet élément 30 pourra être une loupe afin d'agrandir une information pour en faciliter la lecture. Dans ce cas, le corps 2a comprend une base circulaire 21 pour la fixation de l'aiguille au mouvement. A partir de cette base circulaire, une poutre 22 s'étend de sorte à porter les moyens d'attache 2b comme visible aux figures 1 et 9.

Une seconde possibilité est que l'élément 30 assemblé à l'aiguille soit un élément décoratif. Par exemple, cet élément 30 sera le balourd d'une aiguille. Dans ce cas, le corps 2a comprend une base circulaire 21 pour la fixation de l'aiguille au mouvement. A partir de cette base circulaire, une première poutre 23 s'étend en s'affinant pour former l'aiguille à proprement parler. Une seconde poutre 22 s'étend, diamétralement opposée à la premier poutre, pour porter les moyens d'attache 2b comme visible aux figures 2 et 8.

Avantageusement selon l'invention, les moyens d'attache 2b comprennent au moins un bras élastique 25, et de préférence deux bras élastiques, s'étendant depuis le corps 2a du premier élément. Chaque bras élastique 25 présente une forme lui permettant de définir un logement L dans lequel la seconde pièce sera placée pour être assemblée.

L'objectif de ce bras élastique 25 est de pouvoir être déformé afin d'agrandir temporairement le logement. Une fois que le logement est agrandi, il devient possible d'y placer la seconde pièce, avant que le logement ne reprenne ses dimensions initiales.

Astucieusement selon l'invention, le bras élastique 25 est réalisé dans un matériau au moins partiellement amorphe comprenant au moins un élément métallique tel qu'un alliage métallique au moins partiellement amorphe. Plus précisément, le bras élastique est de préférence réalisé dans un alliage métallique au moins 50% amorphe. Préférentiellement, la première pièce, comprenant le corps à partir duquel ledit bras élastique s'étend, est réalisée en un matériau métallique au moins partiellement amorphe.

Cet élément métallique peut être un élément métallique classique du type fer, nickel, zirconium, titane ou aluminium ou un élément métallique précieux tel que l'or, le platine, le palladium, le rhénium, le ruthénium, le rhodium, l'argent, l'iridium ou l'osmium. On comprendra par matériau au moins partiellement amorphe que le matériau est apte à se solidifier au moins partiellement en phase amorphe, c'est-à-dire qu'il est soumis à une montée en température au-dessus de sa température de fusion lui permettant de perdre localement toute structure cristalline, ladite montée étant suivie d'un refroidissement à une température inférieure à sa température de transition vitreuse lui permettant de devenir au moins partiellement amorphe. Ce matériau peut alors être un alliage métallique.

Un tel matériau amorphe est utilisé car il présente l'avantage, lors de sa fabrication, de voir ses atomes ne pas s'arranger selon une structure particulière comme c'est le cas pour les matériaux cristallins. Ainsi, même si le module d'Young E d'un métal cristallin et celui d'un métal amorphe sont proches, la limite élastique σₑ est différente. Un métal amorphe se différencie alors par une limite élastique σ_{eA} plus élevée que celle σ_{eC} du métal cristallin d'un facteur sensiblement allant de deux à quatre. Cela permet aux métaux amorphes de pouvoir subir une plus forte contrainte avant d'arriver à la limite élastique σₑ.

Par conséquent, le fait d'avoir un bras élastique 25 réalisé en un matériau métallique amorphe permet de lui appliquer une contrainte plus forte avant que celui-ci ne se déforme plastiquement c'est-à-dire définitivement. Par conséquent, il devient possible de déformer le bras 25 de façon plus importante pour agrandir temporairement le logement L. Le fait de pouvoir agrandir le logement L de façon plus importante permet de faciliter l'assemblage. De plus, la force de maintien de l'assemblage, assurée par le retour élastique du bras, sera plus grande, et de l'ordre de dix fois supérieure aux valeurs obtenues avec des métaux cristallins.

Dans une variante avantageuse, les moyens d'attache 2b comprennent deux bras élastiques 25. Ces deux bras élastiques 25 sont agencés pour définir ledit logement. Dans un exemple représentatif, les deux bras sont réalisés pour être symétriques par rapport à l'axe longitudinal C de l'aiguille. Une telle configuration permet d'avoir un meilleur maintien puisque ce dernier est assuré par deux bras au lieu d'un.

Pour procéder à l'assemblage de la première pièce et de la seconde pièce, la première étape consiste à se munir de la première pièce et de la seconde pièce.

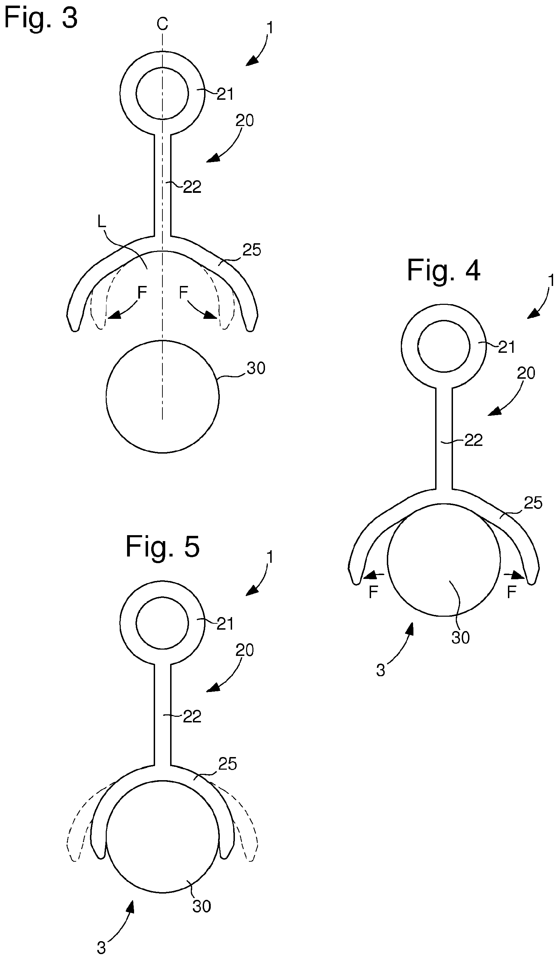

Dans une seconde étape, il s'agit alors d'agrandir le logement L formé par les moyens d'attache 2b. Cette seconde étape consiste à se munir d'un outil conçu pour exercer une force/contrainte F sur le ou les bras élastiques 25. Cette contrainte entraîne alors une déformation du ou des bras élastiques. L'outil est alors réalisé pour que la contrainte qu'il applique sur le ou les bras élastiques les déforme de façon à ce que le logement L défini par ces bras élastiques 25 s'agrandisse temporairement comme visible à la figure 3.

Une fois le logement L agrandi, la seconde pièce 30 est insérée dans le logement. Pour cela, l'opérateur saisit la seconde pièce 3 à la main ou via un outil de préhension et insère la seconde pièce 3 dans le logement tout en gardant la contrainte exercée sur le ou les bras comme visible à la figure 4.

Dans une étape suivante, lorsque la seconde pièce 3 est insérée dans le logement, la contrainte F exercée sur les bras 25 est relâchée. Ce relâchement de la contrainte implique que le ou les bras élastiques 25 ont tendance à reprendre leur position de repos. En reprenant leur position de repos, les bras 25 appliquent une force de maintien sur la seconde pièce 3 afin que la première pièce 2 et la seconde pièce 3 forment un ensemble qui est le dispositif final 1 comme visible à la figure 5.

Dans une variante, l'étape consistant à déformer les bras élastiques et l'étape consistant à insérer la seconde pièce dans le logement sont fusionnées. En effet, le ou les bras élastiques 25 forment un logement L ouvert c'est-à-dire que les bras n'enserrent pas totalement la seconde pièce 3 lorsque celle-ci est assemblée.

Pour cette variante, le ou les bras élastiques 25 sont donc conçus pour avoir une forme leur permettant, lorsque la seconde pièce 3 est insérée dans le logement à force F', de se déformer. Cette déformation entraîne alors un agrandissement temporaire dudit logement L facilitant l'insertion de la seconde pièce comme visible aux figures 6 et 7.

Lorsque la seconde pièce 3 est insérée dans le logement, la contrainte exercée sur le ou les bras 25 est naturellement relâchée. Le ou les bras élastiques 25 reprennent leur position de repos. En reprenant leur position de repos, le ou les bras appliquent une force de maintien sur la seconde pièce 3 afin que la première pièce et la seconde pièce forment un ensemble qui est le dispositif final.

Afin de renforcer le maintien de la seconde pièce 3, il est possible que celle-ci comprenne par exemple une gorge dans laquelle les bras élastiques s'insèrent.

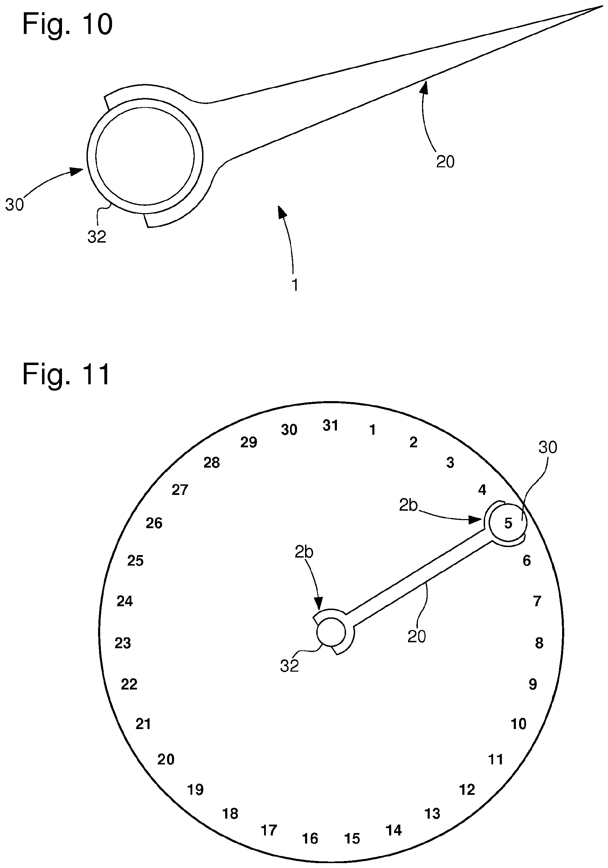

Il est bien sûr possible d'utiliser la même technique pour solidariser une aiguille sur son axe d'entraînement ou canon 32, plutôt que le chassage via la zone 21 comme visible à la figure 10.

En combinant les deux, il est donc possible d'avoir une pièce 2 avec un ou des bras élastiques de part et d'autre de la poutre 23, permettant d'une part de solidariser ou maintenir une deuxième pièce décorative ou fonctionnelle, puis ensuite d'assembler avec le même procédé cet assemblage à son axe d'entraînement comme visible à la figure 11.

Il est également possible que ce soit la deuxième pièce, et non la première qui soit en métal partiellement amorphe, et que ce soit elle qui se déforme lors de l'étape d'insertion avant de reprendre sa forme initiale pour remplir le logement. Ceci peut être utilisé par exemple pour pouvoir facilement changer la forme de l'extrémité d'une aiguille (pointe de flèche ou demi-cercle, etc...).

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

## Revendications

1. Procédé d'assemblage d'un dispositif comprenant une aiguille (2) de pièce horlogère et au moins une pièce d'extrémité (3) devant être assemblée avec une extrémité de l'aiguille, l'aiguille étant réalisée en un matériau métallique au moins partiellement amorphe, **caractérisé en ce que** ledit procédé comprend en outre les étapes suivantes :
- se munir de l'aiguille (2) et de la pièce d'extrémité (3), l'aiguille comprenant un corps (2a) et des moyens d'attache (2b) définissant un logement, les moyens d'attache (2b) comportant deux bras élastiques en matériau métallique au moins partiellement amorphe ;
- déformer les moyens d'attache en exerçant une force afin d'agrandir temporairement le logement ;
- placer la pièce d'extrémité dans le logement (L) ;
- relâcher la force exercée sur les moyens d'attache pour permettre au logement de reprendre ses dimensions initiales et maintenir la pièce d'extrémité.

2. Procédé d'assemblage d'un dispositif comprenant une aiguille (2) de pièce horlogère et au moins une pièce d'extrémité (3) devant être assemblée avec une extrémité de l'aiguille, la pièce d'extrémité étant réalisée en un matériau métallique au moins partiellement amorphe, **caractérisé en ce que** ledit procédé comprend en outre les étapes suivantes :
- se munir de l'aiguille (2) et de la pièce d'extrémité (3), l'aiguille comprenant un corps (2a) et des moyens d'attache (2b) définissant un logement (L), les moyens d'attache comportant deux bras;
- déformer élastiquement la pièce d'extrémité en exerçant une force afin de pouvoir l'insérer dans le logement de l'aiguille;
- placer la pièce d'extrémité dans le logement ;
- relâcher la force exercée sur la pièce d'extrémité pour qu'elle remplisse le logement et soit maintenue par les moyens d'attache de l'aiguille.

3. Procédé d'assemblage selon les revendications 1 ou 2, **caractérisé en ce que** la force est exercée via un outil.

4. Procédé d'assemblage selon les revendications 1 ou 2, **caractérisé en ce que** les étapes de déformation, d'insertion et de relâchement de la force exercée sont regroupées en une seule étape d'insertion à force de la seconde pièce.

5. Procédé d'assemblage selon l'une des revendications précédentes, **caractérisé en ce que** la pièce d'extrémité est un élément décoratif.

6. Procédé d'assemblage selon l'une des revendications précédentes, **caractérisé en ce que** la pièce d'extrémité est un élément fonctionnel pris dans le groupe suivant : canon, axe, contrepoids, indicateur, vernier, loupe, une pastille de matière fluorescente ou phosphorescente, une LED.

7. Procédé d'assemblage selon l'une des revendications 1 à 6, **caractérisé en ce que** le matériau métallique est totalement amorphe.

8. Procédé selon l'une des revendications 1 à 6, dans lequel le matériau métallique est au moins 50% amorphe.

9. Dispositif (1) comprenant une aiguille (2) pour pièce horlogère et au moins une pièce d'extrémité (3) devant être assemblée avec une extrémité de l'aiguille, l'aiguille comprenant un corps (2a) à partir duquel des moyens d'attache (2b) s'étendent, les moyens d'attache comportant deux bras élastiques, les moyens d'attache définissant un logement (I) pour la pièce d'extrémité, les deux bras élastiques étant réalisés en un matériau métallique au moins partiellement amorphe permettant aux moyens d'attache d'être déformés pour agrandir temporairement ledit logement pour l'insertion de la pièce d'extrémité.

10. Dispositif (1) comprenant une aiguille (2) pour pièce horlogère et au moins une pièce d'extrémité (3) devant être assemblée avec une extrémité de l'aiguille, l'aiguille comprenant un corps à partir duquel des moyens d'attache s'étendent, les moyens d'attache comportant deux bras définissant un logement pour la pièce d'extrémité, la pièce d'extrémité étant réalisée en un matériau métallique au moins partiellement amorphe lui permettant d'être temporairement déformée pour permettre son insertion dans le logement.

11. Dispositif selon l'une des revendications 9 ou 10, dans lequel la pièce d'extrémité est cylindrique.

12. Dispositif selon l'une des revendications 9 ou 10, dans lequel la pièce d'extrémité est ovale.

13. Dispositif selon l'une des revendications 9 à 12, dans lequel la pièce d'extrémité présente un diamètre compris entre 0.5mm et 5mm

14. Dispositif selon l'une des revendications 9 à 13, dans lequel la pièce d'extrémité est une loupe.

15. Dispositif selon l'une des revendications 9 à 13, dans lequel la pièce d'extrémité est un contrepoids.

16. Dispositif selon l'une des revendications 9 à 13, dans lequel la pièce d'extrémité est un élément décoratif.

17. Dispositif selon l'une des revendications 9 à 13, **caractérisé en ce que** la pièce d'extrémité est un indicateur.

18. Dispositif selon l'une des revendications 9 à 13, **caractérisé en ce que** la pièce d'extrémité est un canon ou un axe (32) sur lequel ladite aiguille (20) est fixée.

## Patentansprüche

1. Verfahren zum Zusammenbau einer Vorrichtung, umfassend einen Uhrenzeiger (2) sowie mindestens ein an einem Ende des Zeigers zu montierendes Endstück (3), wobei der Zeiger aus einem mindestens teilweise amorphen Metallmaterial hergestellt ist, **dadurch gekennzeichnet, dass** das Verfahren ferner die folgenden Schritte umfasst:
- Bereitstellen des Zeigers (2) und des Endstücks (3), wobei der Zeiger einen Körper (2a) und Befestigungsmittel (2b) aufweist, die eine Aufnahme definieren, und die Befestigungsmittel (2b) zwei elastische Arme aus einem mindestens teilweise amorphen metallischen Material umfassen;
- Verformen der Befestigungsmittel durch Ausüben einer Kraft, um die Aufnahme vorübergehend zu vergrößern;
- Anordnen des Endstücks in der Aufnahme (L);
- Entfernen der auf die Befestigungsmittel ausgeübten Kraft, um der Aufnahme zu ermöglichen, ihre ursprünglichen Abmessungen wieder einzunehmen und das Endstück zu halten.

2. Verfahren zum Zusammenbau einer Vorrichtung, umfassend einen Uhrenzeiger (2) und mindestens ein an einem Ende des Zeigers zu montierendes Endstück (3), wobei das Endstück aus einem mindestens teilweise amorphen Metallmaterial hergestellt ist, **dadurch gekennzeichnet, dass** das Verfahren ferner die folgenden Schritte umfasst:
- Bereitstellen des Zeigers (2) und des Endstücks (3), wobei der Zeiger einen Körper (2a) und Befestigungsmittel (2b) aufweist, die eine Aufnahme (L) definieren, und die Befestigungsmittel zwei Arme umfassen;
- elastisches Verformen des Endstücks durch Ausüben einer Kraft, um es in die Aufnahme des Zeigers einsetzen zu können;
- Anordnen des Endstücks in der Aufnahme;
- Entfernen der auf das Endstück ausgeübten Kraft, damit es die Aufnahme ausfüllt und durch die Befestigungsmittel des Zeigers an seinem Platz gehalten wird.

3. Verfahren zum Zusammenbau nach Anspruch 1 oder 2, **dadurch gekennzeichnet, dass** die Kraft über ein Werkzeug ausgeübt wird.

4. Verfahren zum Zusammenbau nach Anspruch 1 oder 2, **dadurch gekennzeichnet, dass** die Schritte zum Verformen, Einsetzen und Entfernen der ausgeübten Kraft in einem einzigen Schritt zum Einsetzen mit Kraft des zweiten Stücks zusammengefasst sind.

5. Verfahren zum Zusammenbau nach einem der vorhergehenden Ansprüche, **dadurch gekennzeichnet, dass** das Endstück ein Dekorelement ist.

6. Verfahren zum Zusammenbau nach einem der vorhergehenden Ansprüche, **dadurch gekennzeichnet, dass** das Endstück ein funktionales Element ist, das aus der folgenden Gruppe ausgewählt ist: Stundenrohr, Welle, Gegengewicht, Anzeiger, Nonius, Lupe, Pastille aus fluoreszierendem oder phosphoreszierendem Material, eine LED.

7. Verfahren zum Zusammenbau nach einem der Ansprüche 1 bis 6, **dadurch gekennzeichnet, dass** das metallische Material vollständig amorph ist.

8. Verfahren nach einem der Ansprüche 1 bis 6, wobei das metallische Material mindestens zu 50 % amorph ist.

9. Vorrichtung (1) umfassend einen Zeiger (2) für eine Uhr und mindestens ein an einem Ende des Zeigers zu montierendes Endstück (3), wobei der Zeiger einen Körper (2a) aufweist, von dem sich Befestigungsmittel (2b) erstrecken, wobei die Befestigungsmittel zwei elastische Arme umfassen, wobei die Befestigungsmittel eine Aufnahme (I) für das Endstück definieren, und die beiden elastischen Arme aus einem mindestens teilweise amorphen metallischen Material hergestellt sind, das es ermöglicht, die Befestigungsmittel so zu verformen, dass sie die Aufnahme zum Einsetzen des Endstücks vorübergehend vergrößern.

10. Vorrichtung (1), umfassend einen Uhrenzeiger (2) und mindestens ein an einem Ende des Zeigers zu montierendes Endstück (3), wobei der Zeiger einen Körper aufweist, von dem sich Befestigungsmittel erstrecken, die Befestigungsmittel zwei Arme umfassen, die eine Aufnahme für das Endstück definieren, und das Endstück aus einem mindestens teilweise amorphen metallischen Material hergestellt ist, das es ihm ermöglicht, vorübergehend verformt zu werden, um sein Einsetzen in die Aufnahme zu ermöglichen.

11. Vorrichtung nach einem der Ansprüche 9 oder 10, wobei das Endstück zylindrisch ist.

12. Vorrichtung nach einem der Ansprüche 9 oder 10, wobei das Endstück oval ist.

13. Vorrichtung nach einem der Ansprüche 9 bis 12, wobei das Endstück einen Durchmesser im Bereich von 0,5 mm bis 5 mm besitzt.

14. Vorrichtung nach einem der Ansprüche 9 bis 13, wobei das Endstück eine Lupe ist.

15. Vorrichtung nach einem der Ansprüche 9 bis 13, wobei das Endstück ein Gegengewicht ist.

16. Vorrichtung nach einem der Ansprüche 9 bis 13, wobei das Endstück ein Dekorelement ist.

17. Vorrichtung nach einem der Ansprüche 9 bis 13, **dadurch gekennzeichnet, dass** das Endstück ein Anzeiger ist.

18. Vorrichtung nach einem der Ansprüche 9 bis 13, **dadurch gekennzeichnet, dass** das Endstück ein Stundenrohr oder eine Welle (32) ist, an der der Zeiger (20) befestigt ist.

## Claims

1. Method for assembling a device comprising a timepiece hand (2) and at least one end piece (3) to be assembled to one end of the hand, the hand being made of an at least partially amorphous metal material, **characterized in that** said method further includes the following steps:
- taking the hand (2) and the end piece (3), the hand including a body (2a) and attachment means (2b) defining a housing, the attachment means (3b) including two elastic arms made of at least partially amorphous metal material;
- deforming the attachment means by exerting a force in order to temporarily enlarge the housing;
- placing the end piece inside the housing (L);
- releasing the force exerted on the attachment means to allow the housing to return to its initial dimensions and hold the end piece.

2. Method for assembling a device comprising a timepiece hand (2) and at least one end piece (3) to be assembled to one end of the hand, the end piece being made of an at least partially amorphous metal material, **characterized in that** said method further includes the following steps:
- taking the hand (2) and the end piece (3), the hand including a body (2a) and attachment means (2b) defining a housing (L), the attachment means including two arms;
- elastically deforming the end piece by exerting a force in order to insert it into the housing of the hand;
- placing the end piece inside the housing;
- releasing the force exerted on the end piece so that it fills the housing and is held by the attachment means of the hand.

3. Assembly method according to any of claims 1 or 2, **characterized in that** the force is exerted by means of a tool.

4. Assembly method according to claims 1 or 2, **characterized in that** the steps of deformation, insertion and releasing the force are grouped into a single step of press fitting the second part.

5. Assembly method according to any of the preceding claims, **characterized in that** the end piece is a decorative element.

6. Assembly method according to any of the preceding claims, **characterized in that** the end piece is a functional element taken from the following group: pipe, arbor, counterweight, indicator, vernier, magnifying glass, disc of fluorescent or phosphorescent material, LED.

7. Assembly method according to any of claims 1 to 6, **characterized in that** the metal material is completely amorphous.

8. Method according to any of claims 1 to 6, wherein the metal material is at least 50% amorphous.

9. Device (1) comprising a hand (2) for a timepiece and at least one end piece (3) to be assembled to one end of the hand, the hand including a body (2a) from which attachment means (2b) extend, the attachment means including two elastic arms, the attachment means defining a housing (L) for the end piece, the two elastic arms being made of an at least partially amorphous metal material allowing the attachment means to be deformed to temporarily enlarge said housing for insertion of the end piece.

10. Device (1) comprising a hand (2) for a timepiece and at least one end piece (3) to be assembled to one end of the hand, the hand including a body from which attachment means extend, the attachment means including two elastic arms defining a housing for the end piece, the end piece being made from an at least partially amorphous metal material allowing it to be temporarily deformed for insertion into the housing.

11. Device according to any of claims 9 or 10, wherein the end piece is cylindrical.

12. Device according to any of claims 9 or 10, wherein the end piece is oval.

13. Device according to any of claims 9 to 12, wherein the end piece has a diameter comprised between 0.5 mm and 5 mm.

14. Device according to any of claims 9 to 13, wherein the end piece is a magnifying glass.

15. Device according to any of claims 9 to 13, wherein the end piece is a counterweight.

16. Device according to any of claims 9 to 13, wherein the end piece is a decorative element.

17. Device according to any of claims 9 to 13, **characterized in that** the end piece is an indicator.

18. Device according to any of claims 9 to 13, **characterized in that** the end piece is a pipe or an arbor (32) on which said hand (20) is secured.
